# EUROPEAN PATENT SPECIFICATION

(11) **EP 4 025 452 B1**
(45) Date of publication and mention of the grant of the patent: **11.11.2026**
(21) Application number: 19765674.7
(22) Date of filing: 03.09.2019
(51) Int. Cl.: B60L 5/20, G01B 11/06, G06T 7/00

(54) **DEVICE AND METHOD FOR DETECTING WEAR AND/OR DAMAGE ON A PANTOGRAPH**
VORRICHTUNG UND VERFAHREN ZUR ERKENNUNG VON ABNUTZUNGEN UND / ODER SCHÄDEN AN EINEM PANTOGRAF
DISPOSITIF ET PROCÉDÉ POUR DÉTECTER UNE USURE ET / OU DES DOMMAGES SUR UN PANTOGRAPHE

(43) Date of publication of application: 13.07.2022
(73) Proprietor: Schweizerische Bundesbahnen SBB, 3000 Bern 65 (CH)
(72) Inventor: GEHRIG, Urs, 4054 Basel (CH); STEGER, Jan, 5606 Dintikon (CH); VAALER, Robin, 8002 Zurich (CH); VON BURG, Dominik, 8953 Dietikon (CH); KRUMMENACHER, Gabriel, 8006 Zurich (CH)
(74) Representative: Rutz, Peter
(86) International application number: PCT/EP2019/073491
(87) International publication number: WO 2021/043388

(56) References cited:
- EP-A1- 3 205 528
- CN-A- 109 143 001
- CN-A- 109 376 609
- US-A1- 2010 322 465
- US-A1- 2013 195 321
- US-A1- 2017 369 057
- US-A1- 2019 138 786
- HAMEY LEONARD G C ET AL: "Pancam: In-service inspection of locomotive pantographs", DIGITAL IMAGE COMPUTING TECHNIQUES AND APPLICATIONS : DICTA 2007 ; 9TH BIENNIAL CONFERENCE OF THE AUSTRALIAN PATTERN RECOGNITION SOCIETY ; GLENEIG [I.E. GLENELG], [ADELAIDE], SOUTH AUSTRALIA, 3 - 5 DECEMBER 2007 ; PROCEEDINGS, IEEE COMPUTER SOCIETY,, 3 December 2007 (2007-12-03), pages 493 - 499, XP002638310, ISBN: 978-0-7695-3067-3, DOI: 10.1109/DICTA.2007.4426837
- MVTEC: "HALCON Professional Software for all Machine Vision Applications", November 2018 (2018-11-01), Munich, Germany, pages 1 - 20, XP055690285, Retrieved from the Internet <URL:http://mavis.com.tr/v2/documents/HALCON_18.11_brochure.pdf> [retrieved on 20200429]
- MVTEC: "HALCON 18.11", 30 November 2018 (2018-11-30), pages 1 - 46, XP055690335, Retrieved from the Internet <URL:https://ibv.vdma.org/documents/256550/27019077/2018-11-08_Stage1_1130_mvtec.pdf/b3f7b263-e826-6e32-8f91-61facd14f906> [retrieved on 20200429]

## Description

### FIELD OF THE INVENTION

The present invention relates to a method and device for detecting wear and/or damage on a pantograph. Specifically, the present invention relates to a method, a device, and a computer program product for detecting wear and/or damage on a pantograph.

### BACKGROUND OF THE INVENTION

The pantograph is an essential part of the high voltage traction system of rail vehicles. It couples directly with the overhead contact line and comprises a base frame attached to the roof of the rail vehicle, pantograph arms which are raised and lowered pneumatically, a rocker which adjusts the tilt of the pantograph, and typically two pantograph bows on which carbon current collectors are attached. The carbon current collectors form direct electrical contact with the overhead contact line and transfer the high voltage alternating current from the overhead contact line to the traction transformer in the rail vehicle.

Pantographs are exposed to the environment and subject to harsh conditions. Especially the carbon current collectors, normally consisting of a low friction graphite contact strip, are subject to considerable wear and tear during normal operations due to the friction between the carbon current collectors and the overhead contact line, which abrades the surface of the carbon current collectors. In addition to the normal abrasion which occurs at a rate strongly dependent on the operating conditions, damage may occur to the carbon current collector which requires maintenance and/or replacement of the carbon current collector.

Pantographs are therefore subject to frequent inspections and are regularly replaced when wear and/or damage has been detected to exceed certain thresholds. Many pantograph inspection processes still rely on manual visual inspection whereby a technician must climb onto the roof of the rail vehicle and visually inspect the condition of the pantograph, which is very time and labour intensive. Some automated systems are known to exist, however they are often limited in the level of accuracy which can be achieved to determine wear and in the types of damage they can detect, and such systems are cumbersome in their use. In particular, they often rely on the pantograph being moved into a particular configuration, require special types of carbon current collectors to be used, or employ the use of lasers which necessitates a high level of personal protective equipment for technicians.

Document US2010/322465A1 discloses a method for detecting wear and/or damage on a pantograph.

### SUMMARY OF THE INVENTION

It is an object of this invention to provide a method and device for detecting wear and/or damage on a pantograph. Specifically, the present invention relates to a method, a device, and a computer program product for detecting wear and/or damage on a pantograph. According to the present invention, these objects are achieved through the features of the independent claims. In addition, further advantageous embodiments follow from the dependent claims and the description.

According to the present invention, the above-mentioned objects are particularly achieved by a computer-implemented method for detecting wear and/or damage of a carbon current collector of a pantograph. The pantograph is attached to a vehicle with an overhead contact line, in particular a train or tram, the method comprising a number of steps. The method comprises recording, by an imaging module having at least one camera, one or more images of the pantograph. The method further comprises receiving, in a processor, from the imaging module, the one or more images. The method further comprises identifying, by the processor, features in the one or more images of the carbon current collector by use of a neural network. The method further comprises extracting, by the processor, shape information of the carbon current collector from the one or more images. The method comprises generating, by the processor, by using the features and the shape information, monitoring data comprising information about wear and/or damage of the carbon current collector. The method further comprises generating, by the processor, a message comprising the monitoring data for planning and/or performing maintenance actions for the pantograph.

In an embodiment, identifying the features of the carbon current collector using the neural network further comprises the processor training the neural network to detect the features using machine learning and a training dataset comprising images of pantographs labeled with the features.

In an embodiment, identifying the features of the carbon current collector using the neural network comprises the processor using a convolutional neural network, preferably comprising a U-Net and/or a ResNet.

In an embodiment, the computer-implemented method comprises further steps. The method comprises recording, in the imaging module, one or more images comprising one or more reference pieces of known dimensions and/or orientations arranged near the pantograph. The method comprises receiving, in the processor, the one or more images comprising the one or more reference pieces. The method comprises identifying, by the processor, the one or more reference pieces. The method comprises extracting, by the processor, from the shape information an image height profile of the carbon current collector. The method further comprises generating, by the processor, an absolute height profile of the carbon current collector by using the image height profile and the known dimensions and/or orientations of the one or more reference pieces.

In an embodiment, extracting the shape information, in particular the height profile, of the carbon current collector comprises the processor performing further steps. The steps comprise determining at least approximate contour-lines of the carbon current collector in the one or more images. The steps further comprise determining, using the contour-lines, an image height profile of the carbon current collector in the one or more imagesat a first plurality of points. The steps further comprise determining, using the image height profile, at a second plurality of points, an absolute height profile of the carbon current collector as a function of positions along a longitudinal axis of the carbon current collector.

In an embodiment, the method comprises recording, by the imaging module, using exactly one camera of the imaging module, the one or more images of the pantograph, in particular recording with exactly one camera a time series of single-perspective images each taken when the pantograph is positioned at a predefined distance or within a predefined distance interval to the camera. The method further comprises receiving, in the processor, the one or more images. The method further comprises identifying, by the processor, in the one or more images the features of the carbon current collector using the neural network. The method further comprises extracting, by the processor, from the one or more images an image height profile of the carbon current collector. The method further comprises determining, by the processor, the image height profile of the carbon current collector to an absolute height scale by using one or more reference pieces of known dimensions and/or orientations arranged near the pantograph.

In an embodiment, determining wear on the carbon current collector comprises the processor determining the wear with an absolute height scale accuracy of ±2 millimeters, preferred ±1 millimeters, more preferred ±0.5 millimeters, most preferred ±0.3 millimeters.

In an embodiment, the method comprises recording, using at least two cameras of the imaging module, two or more images taken from a plurality of perspectives or angles of the pantograph. The method further comprises receiving, in the processor, two or more images. The method further comprises identifying, by the processor, in the two or more images, the features of the carbon current collector by use of the neural network, in particular without stereoscopic image analysis. The method further comprises extracting, by the processor, from the two or more images, a plurality of height profiles of the carbon current collector. The method further comprises generating, by the processor, monitoring data comprising information on wear and/or damage of the carbon current collector with improved accuracy, by using, from the two or more images, the identified features and the extracted plurality of height profiles. Such improved accuracy can e.g. be achieved by processing, e.g. averaging, the plurality of image height profiles of the carbon current collector to derive a consolidated image height profile of the carbon current collector of higher accuracy.

In an embodiment, identifying, by the processor, the features in the one or more images comprises identifying one or more of: a mask which defines boundaries, edges, contour-lines, worn areas, damaged areas, abraded areas, chipped areas, fractures, fissures, and cracks.

According to the invention, the processor is configured to use only the one or more images recorded by the imaging module and the neural network to identify the features of the carbon current collector and/or to extract the height profile of the carbon current collector. In particular, no use is made of an a-priori model, such as a CAD model, of the carbon current collector or of the pantograph. This has the advantage that the system or method can be used generically, i.e. different types and/or shapes of carbon current collectors or pantographs can be monitored without adaptation of the system or method.

In an embodiment, the method further comprises predicting, by the processor, using monitoring data and a prediction model, a next monitoring date on which the carbon current collector of the pantograph is to be monitored and/or replaced. The method further comprises generating, by the processor, a message comprising the next monitoring date.

In addition to the computer-implemented method for detecting wear and/or damage on a pantograph, the present invention also relates to a pantograph monitoring device, in particular for performing the computer-implemented method as described above and for detecting wear and/or damage of a carbon current collector of a pantograph attached to a vehicle with an overhead contact line, in particular a train or tram. The pantograph monitoring device comprises an imaging module comprising at least one camera arranged to view the pantograph, in particular from above, and configured to record one or more images of the pantograph. The pantograph monitoring device further comprises an analysis module, connected to the imaging module, comprising a processor. The processor is configured to receive, from the imaging module, the one or more images. The processor is further configured to identify, in the one or more images, by use of a neural network, features of the carbon current collector. The processor is further configured to extract from the one or more images shape information of the carbon current collector. The processor is further configured to generate, using the features and the shape information, monitoring data comprising information on wear and/or damage of the carbon current collector. The processor is further configured to generate a message comprising the monitoring data relating to the status of the carbon current collector for planning and/or performing maintenance actions for the pantograph, in particular for planning and/or performing maintenance and/or replacement of the carbon current collector (5).

In an embodiment, the imaging module is arranged to view one or more reference pieces of known dimensions and/or orientations arranged near the pantograph, in particular on the pantograph, and the processor is further configured to extract from the shape information an image height profile of the carbon current collector. The processor is further configured to identify the one or more reference pieces. The processor is further configured to generate an absolute height profile of the carbon current collector by using the image height profile and a comparison to the known dimensions and/or orientations of the one or more reference pieces.

In an embodiment, the at least one camera of the imaging module is arranged at a position and/or perspective or angle such that it records one or more images of the one or more reference pieces without or with negligible or with predetermined constant skew and/or distortion.

In an embodiment, the imaging module comprises a plurality of cameras configured to record one or more images from a plurality of perspectives or angles to improve image analysis, in particular without stereoscopic image analysis.

In an embodiment, the imaging module uses a single camera. In particular, the exactly one camera is configured to record a time series of single-perspective images each taken when the pantograph is positioned at a predefined distance or within a predefined distance interval to the camera.

In an embodiment, the imaging module further comprises a lighting module configured to illuminate the pantograph when recording the one or more images of the pantograph.

In an embodiment, the pantograph monitoring device is stationary, and the imaging module is further configured to record the one or more images when the pantograph, or the train or tram to which the pantograph is attached, is moving.

In addition to the computer-implemented method and the pantograph monitoring device, the present invention also relates to a computer program product comprising a non-transitory computer-readable storage medium having stored thereon computer program code configured to control a processor of a computer. The computer program code is configured such that the computer performs the steps of: recording, using an imaging module having at least one camera, one or more images of the pantograph; receiving from the imaging module the one or more images; identifying in the one or more images features of the carbon current collector by use of a neural network; extracting from the one or more images shape information of the carbon current collector; generating by using the features and the shape information, monitoring data comprising information on wear and/or damage of the carbon current collector; and generating a message comprising monitoring data for planning and/or performing maintenance actions for the pantograph.

### BRIEF DESCRIPTION OF THE DRAWINGS

The present invention will be explained in more detail, by way of example, with reference to the drawings in which:
- Figure 1:: shows a block diagram illustrating schematically a pantograph monitoring device comprising an imaging module and an analysis module.
- Figure 2:: illustrates schematically the pantograph monitoring device comprising an imaging module and an analysis module, and a vehicle with a pantograph and carbon current collector.
- Figure 3:: illustrates schematically the pantograph comprising two carbon current collectors and two reference pieces.
- Figure 4:: shows a flow diagram illustrating a sequence of steps for detecting wear and/or damage on a pantograph.
- Figure 5:: shows a flow diagram illustrating a sequence of steps for using one or more reference pieces to generate an absolute height profile.
- Figure 6:: shows a flow diagram illustrating a sequence of steps for determining an absolute height profile using contour lines.
- Figure 7:: illustrates schematically a carbon current collector with areas of wear.
- Figure 8:: illustrates schematically a carbon current collector with angled abraded areas.
- Figure 9:: illustrates schematically a close-up view of a carbon current collector with an angularly abraded area.
- Figure 10:: illustrates schematically a carbon current collector viewed front-on with both the worn front edge and the worn rear edge visible.

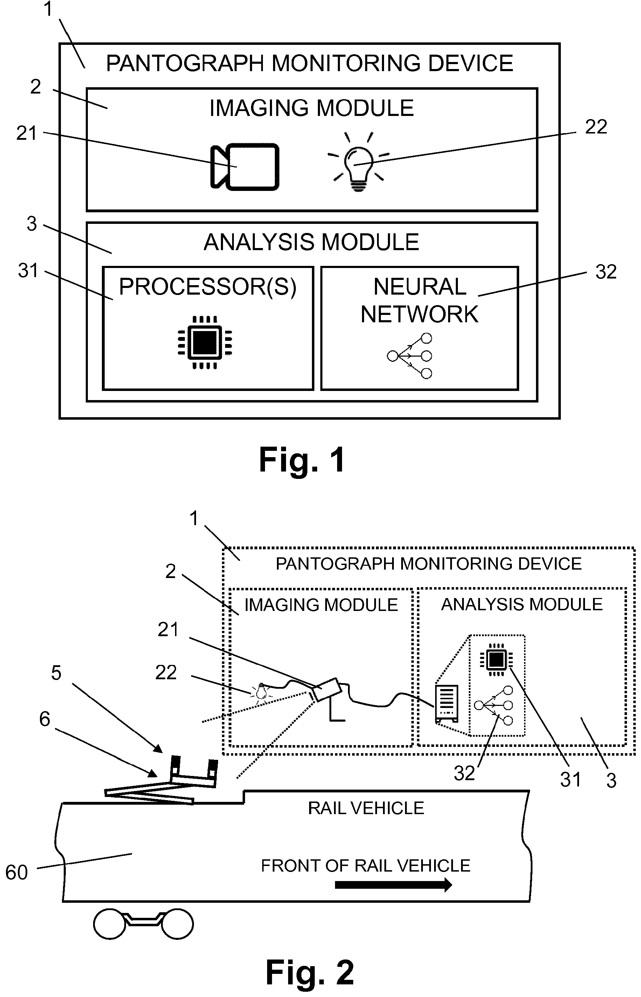

- Figure 1 1:: illustrates schematically a carbon current collector with chipped areas.

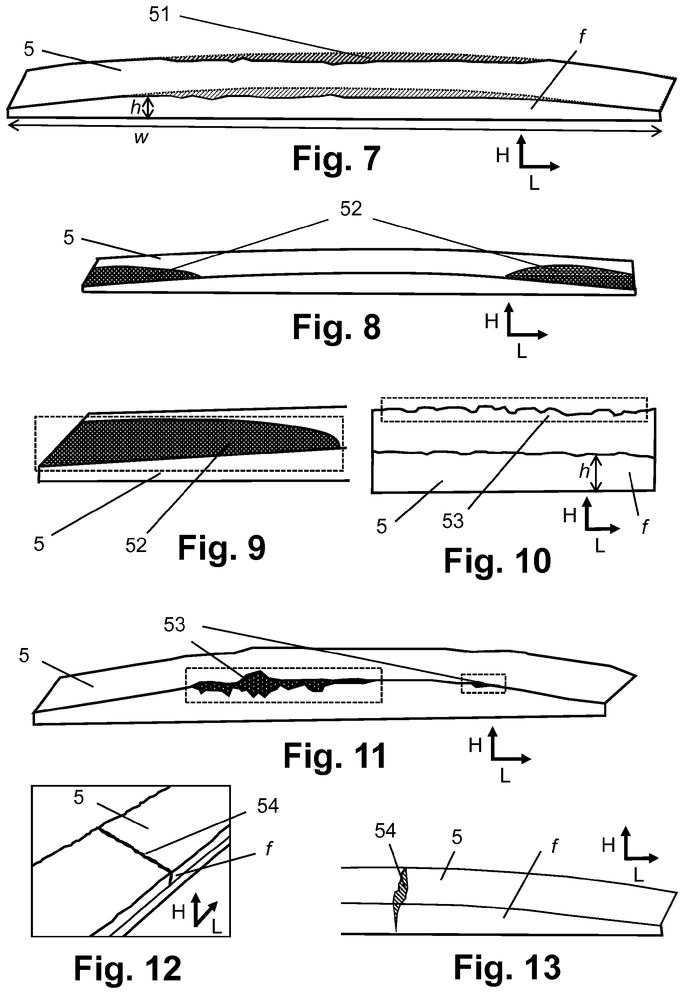

- Figure 12:: illustrates schematically a carbon current collector with a fracture.
- Figure 13:: illustrates schematically a carbon current collector with a fracture.

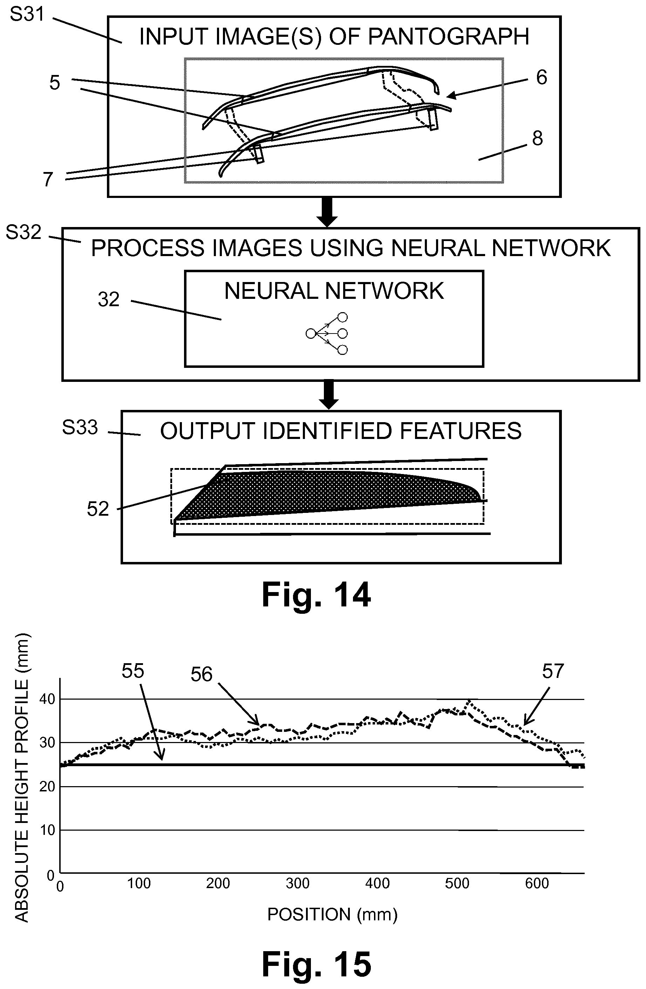

- Figure 14:: shows a flow diagram illustrating a sequence of steps for identifying features by use of a neural network.
- Figure 15:: shows a plot showing a height profile of the worn front edge and the worn rear edge of a carbon current collector.

### DETAILED DESCRIPTION OF THE PREFERRED EMBODIMENTS

In **Figure 1****,** reference numeral 1 refers to a pantograph monitoring device comprising an imaging module 2 and an analysis module 3. The imaging module 2 comprises one or more cameras 21 and optionally a lighting module 22. The cameras 21 are preferably digital cameras, preferably using a charged coupled device (CCD) sensor or a complementary metal oxide semiconductor (CMOS) sensor. The cameras 21 are be configured to capture still images or configured to capture a series of still images in a video. The cameras 21 can be fitted with a lens system. The specific fitted lens system used on the cameras 21 can depend on the implementation of the invention. The lighting module 22 can be a fluorescent light, LED light, flash, strobe, and/or other type of light configured to illuminate a field of view of the cameras 21. The imaging module 2 can be integrated into the pantograph monitoring device 1. In an embodiment, the imaging module 2 is connected to the pantograph monitoring device 1 by a data connection system.

The term data connection system means a system that facilitates data communication between two components, devices, systems, or other entities. The data connection system is wired, such as a cable or system bus, e.g. over a USB (Universal Serial Bus) connection. In another example, the data connection system includes wireless communication, e.g. over WLAN (Wireless Local Area Network), Bluetooth, Bluetooth LE (Low Energy), ANT+, mobile radio, etc. The data connection system, in some examples, includes communication via networks, such as local area networks, mobile radio networks, and/or the Internet. The Internet can, depending on the implementation, include intermediary networks.

The analysis module 3 comprises one or more computers with one or more processors 31. The processors 31 can comprise a system on a chip (SoC), a central processing unit (CPU), and/or other more specific processing units such as a graphical processing unit (GPU), application specific integrated circuits (ASICs), reprogrammable processing units such as field programmable gate arrays (FPGAs), as well as processing units specifically configured to accelerating certain applications, such as Al (Artificial Intelligence) Accelerators for accelerating neural network and/or machine learning processes.

The analysis module 3 further includes various components, such as a data storage system, a communication interface and/or a user interface. The components of the analysis module 3 are connected each other via the data connection system, such that they are able to transmit and/or receive data. The analysis module 3, in an embodiment, comprises a server at a location remote from the pantograph monitoring device 1, such as a cloud server. For example, the cloud server carries out one or more functions or processes for the analysis module 3, stores data in a cloud server storage system, and provides the stored data to client devices. The client devices are portable and/or stationary electronic devices used by technicians or service personnel, such as laptops, tablets, smart phones, and personal computers.

The data storage system comprises one or more volatile and or non-volatile storage components. The storage components may be removable and/or non-removable, and can also be integrated, in whole or in part with the processor 31. Examples of storage components include RAM (Random Access Memory), flash memory, hard disks, data memory, and/or other data stores. The data storage system comprises a non-transitory computer-readable storage medium having stored thereon computer program code configured to control a processor 31, such that the analysis module 3 performs one or more steps and/or functions as described herein. Depending on the embodiment, the computer program code is compiled or non-compiled program logic and/or machine code. As such, the analysis module 3 is configured to perform one or more steps and/or functions. The computer program code defines and/or is part of a discrete software application. One skilled in the art will understand, that the computer program code can also be distributed across a plurality of software applications. In an embodiment, the computer program code further provides interfaces, such as APIs, such that functionality and/or data of the analysis module 3 can be accessed remotely, such as via a client application or via a web browser.

The neural network 32 is a software module which takes as an input one or more images 8 and outputs detected features. The neural network 32 is a feed-forward neural network which implements a function which can be decomposed into other functions. The neural network 32 comprises a set of parameters. The neural network 32 can be represented as a sequence of layers, which layers may be grouped into sub-networks. Each layer comprises a set of nodes, each node having adjustable parameters including at least one or more weight parameters and a bias parameter. The sequence of layers comprises an input layer, into which images 8 are passed, a succession of hidden layers, and an output layer, which outputs the detected features. The neural network 32 is configured to perform image classification. Preferably, the neural network 32 is a convolutional neural network. In one example, the neural network 32 comprises a U-Net. The use of a U-Net allows the neural network 32 to quickly and precisely segment images 8 and detect features in the images 8. In an example, the neural network 32 comprises a ResNet, which uses Skip Connections between layers in the neural network 32 to train neural networks which have many more layers than is otherwise typically possible using convolutional neural networks.

In an embodiment, the neural network 32 is configured such that it processes high resolution images 8, for example images of 10 megapixels or higher. Processing high resolution images 8 has the disadvantage that the number of parameters is typically higher, however in the present invention using high resolution images 8 offers higher accuracy in determining (including quantifying) wear and/or damage.

In an embodiment, the neural network 32 is configured such that it processes two or more images 8 of the pantograph 6 simultaneously and identifies features in the two or more images 8. This enables the neural network 32 to efficiently process two or more images allowing the analysis module 3 to efficiently, accurately, and reliably identify features in the images 8, which features may not all be in the field of view of a single camera 21.

The neural network 32 is initially in an untrained state. The neural network 32 is then trained in a training phase, which takes place before the neural network 32 is used to identify features. The neural network 32 is trained to generate features using machine learning and a training dataset of a large group of pantographs in various states of wear and tear and with various types of damage. The neural network 32 is trained using supervised learning, in which labelled data is used to optimize the parameters of the neural network 32.

In particular, the training data comprises images 8 of pantographs 6, in particular images of carbon current collectors 5. Additionally, some training data comprises images of pantographs 6 with reference pieces 7. The training data is labelled by complementing each image 8 with the features present in the image 8, along with the location in the image 8 of the features. The labelled training data is used during training of the neural network 32. The training data is also used during validation of the neural network 32.

The neural network 32 is trained, during a training phase, to identify features in the images 8 using the labelled training data. The neural network 32 at first randomly identifies features in the images 8, by assigning to a given region of the image 8 a probability that a given feature is present in the region. To improve the accuracy of the neural network 32, the identified features are compared to the actual features as specified in the labelled training data. The parameters of the neural network 32 are iteratively adjusted to improve the accuracy of the feature identification. The accuracy of the feature identification is determined using a loss function. In particular, the loss function consists of a cross entropy term, as is commonly used in the art of neural networks for classification. Batches of training data are input into the neural network 32 and the loss function is iteratively minimized using a first order optimization technique and back-propagation. Successive training iterations result in a neural network 32 with identified features which lie closer and closer to the actual features as specified in the labelled production data, as reflected mathematically by a smaller cross entropy term. Once the loss function is sufficiently small, the training phase is over. To validate the accuracy of the neural network 32, a subset of the training data which the neural network 32 did not use during the training phase is input into the trained neural network 32. The loss function is used to compare the identified features to the actual features as specified in the data, and if the neural network 32 is sufficiently accurate then it is considered validated.

The neural network 32 is stored, by the processor 31, in the data storage system of the analysis module 3, for use in identifying features in images 8.

The training of the neural network 32 as described above takes place in the processor 31 of the analysis module 3. However, in an embodiment, this takes place on a separate computer system, such as a remote cloud-computing server, after which the neural network 32 is transmitted to the analysis module 3.

**Figure** 2 shows the vehicle 60 arranged in the same location as the pantograph monitoring device 1. A pantograph 6 is arranged on top of the vehicle 60 and comprises one or more carbon current collectors 7. The vehicle 60 is a rail vehicle, such as a train or tram car. The pantograph monitoring device 1 is arranged such that the pantograph 6 is in the field of view of the cameras 21. For example, the one or more cameras 21 are arranged above the pantograph 6. The cameras 21 are spaced a distance apart from each other such that they each view the pantograph 6 from a different perspective. For example, a first camera 21 is arranged in front of the pantograph relative to the front of the vehicle and a second camera 21 is arranged behind the pantograph relative to the front of the vehicle. In another example, the first camera 21 is arranged on one lateral side of the vehicle 60 such that it views the pantograph 6 from a first side of the vehicle 60 and the second camera 21 is arranged on the other lateral side of the vehicle 60 such that it views the pantograph 6 from a second side of the vehicle 60. The cameras 21 of the imaging module 2 are connected to the analysis module 3 by a data connection system as described above.

In an embodiment, the cameras 21 are arranged on movable mounts such that their field of view is adjustable by the imaging module 21.

In an embodiment, the imaging module 2 comprises a single camera 21 arranged preferably above the pantograph 6. The single camera 21 can be configured to capture one or more images 8 of the pantograph 6 when the pantograph 6 is positioned at a predefined distance or in a predefined distance interval to the camera 21.

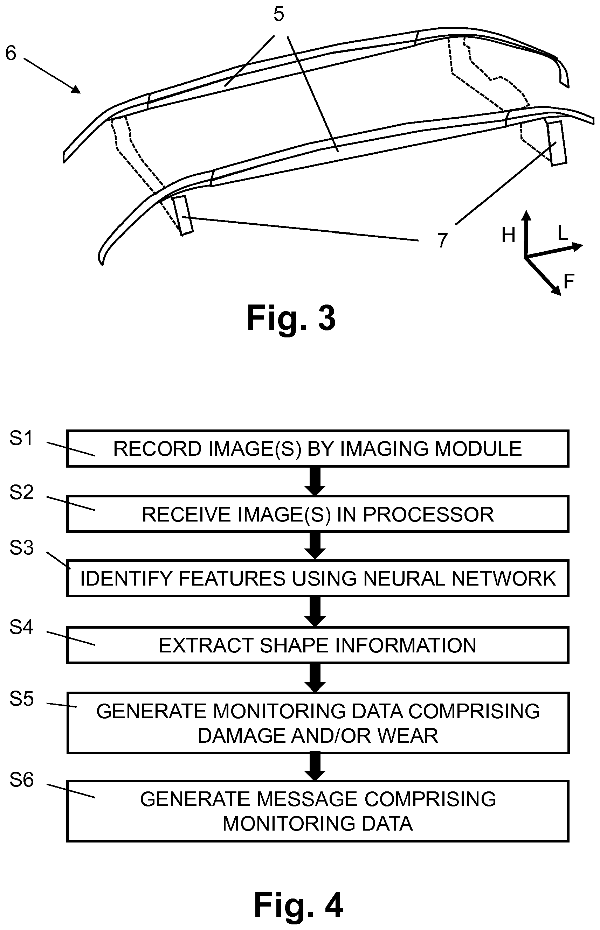

**Figure** 3 illustrates the pantograph 6 with two carbon current collectors 5. The current carbon collectors 5 are arranged in parallel, one behind the other, relative to the travel direction F of the train, such that one carbon current collector 5 is the front carbon current collector 5 and the other is the rear carbon current collector 5. The carbon current collectors 5 feature a flat bottom side and a curved top side which is thicker in the middle than on the lateral ends. In particular, the height h of the carbon current collectors 5 is the thickness of the carbon current collectors 5 in the height direction H, which height h typically varies along a longitudinal direction L, with a maximum height h reached in a middle position along the longitudinal direction L between the two lateral ends of the carbon current collector. Two reference pieces 7 can be arranged on the pantograph 6. The reference pieces 7 can be of a pre-determined color, preferably white. The reference pieces 7 can have a rectangular shape of known dimensions and of known position and angle with respect to the pantograph 6 and to the carbon current collectors 5. In one example, two reference pieces 7 can be arranged at the ends (i.e. lateral ends delimiting the extension along the longitudinal direction L) of the front carbon current collector 5.

**Figure** 4 illustrates an exemplary sequence of steps for carrying out the invention. The vehicle 60 can move, or can be moved, into the field of view of the cameras 21. The vehicle 60 can remain in motion, or, once the vehicle 60 is in the field of view of the cameras 21, the vehicle 60 can come to a complete stop. In one example, the pantograph 6 can retract such that it moves from a raised position to a lowered position.

In an embodiment, the pantograph monitoring device 1 can detect the vehicle 60 by using the RFID reader to read an RFID tag on the vehicle 60, which RFID tag comprises a vehicle identifier.

In step S1, one or more images 8 of the pantograph 6 of the vehicle 60 are recorded by the imaging module 2. In particular, the one or more cameras 21 of the imaging module 2 record one or more images of the carbon current collectors 5 of the pantograph 6. In one example, the images 8 are recorded from one or more different angles and/or perspectives by the one or more cameras 21. In particular, the images 8 are recorded by the imaging module 2 such that both carbon current collectors 5 of the pantograph 6 are visible in their entirety. Further, the images 8 can be recorded such that both the front edge of the carbon current collectors 5 as well as the back edge of the carbon current collectors 5, relative to the front of the train F, are visible in the images 8. In preferred embodiments, the images 8 also include the one or more reference pieces 7.

In an embodiment, the imaging module 2 comprises a lighting module 22, and the imaging module 2 is configured such that the cameras 21 record the images 8 while the lighting module 22 illuminates the pantograph 6. In one example where the lighting module 22 is a flash, the cameras 12 record the images while the pantograph 6 is illuminated by the flash.

In step S2, the images 8 are transmitted by the imaging module 22 to the analysis module 3. The images 8 are transmitted using a data connection mechanism, as described above, and are transmitted wirelessly and/or using a wire. In some examples, the transmission comprises both a wired transmission, for example from the imaging module 22 to a router, and a subsequent wireless transmission from the router to the analysis module 3. The images 8 are received in the analysis module 3 using the communication interface. The images 8 are then received in the processor 31. The images 8 are also stored in the data storage system.

In step S3, features are identified in images 8 by the processor 31 using the neural network 32. The images 8 are input into the neural network 32 which performs classification on the images 8. In particular, the neural network 32 is configured such that the processor 31 of the analysis module 3, using the images 8, generates a list of features.

The features identified by use of the neural network 32 are output by the neural network 32, along with the parts of the image 8 in which each of the identified features are located. The part of the image 8 is a group or region of pixels which includes a feature. In particular, the neural network 32 assigns, to a given part of the image 8, a probability that the given part of the image 8 comprises a given feature. If the probability that the given part of the image 8 contains the given feature exceeds a pre-determined threshold, the neural network 32 includes the part of the image 8 along with the identified feature in the output. The features comprise masks which defines boundaries in the image 8. In an example, the masks define the edges of the pantograph 6, the edges of the carbon current collectors 5, and the edges of the reference pieces 7. The masks are two-dimensional geometric areas. The features further comprise contour-lines which represent the three-dimensional shape of the pantograph 6, in particular the carbon current collectors 5. The features further comprise wear and/or damage indicators.

In an embodiment, the neural network 32 identifies and locates the reference pieces 7. The neural network 32 can further identify the edges of the reference pieces 7 and can therefore generate a reference piece mask which outlines each of the reference pieces 7.

In step S4, the processor 31 extracts shape information of the carbon current collectors 5 from the images 8. The processor 31 uses the identified features, in particular the masks which define the edges of the carbon current collectors 5, to extract shape information of the carbon current collectors 5. The shape information can comprise the absolute dimensions of the carbon current collectors 5 and the absolute height profiles 56, 57 of the carbon current collectors 5. For example, the absolute dimensions define the actual shape, size, and position of the carbon current collectors 5. The absolute height profiles 56, 57 of the carbon current collectors 5 can be compared to a pre-determined model of the carbon current collectors 5 to determine the wear on the carbon current collectors 5. For example, the model could be a CAD model.

In an embodiment, the absolute height profiles 56, 57 of the carbon current collectors 5 are compared to an approximate model of the carbon current collectors 5 which is not pre-determined. The approximate model is generated by interpolating a curve between the lateral ends of the carbon current collectors 5 such that an approximate model of the carbon current collectors 5 is generated representing the carbon current collectors 5 in an undamaged and unworn state.

In step S5, the processor 31 generates monitoring data which indicates wear and/or damage to the carbon current collectors 5 of the pantograph 6. In particular, the processor 31 generates monitoring data using the identified features, which indicate damage, and using the extracted shape information, which indicates wear.

In an embodiment, the processor 31 further compares the identified features which indicate damage to pre-determined damage thresholds, which indicate a maximum allowable amount of damage. If the identified features indicate damage which exceeds the pre-determined damage thresholds, the processor 31 is configured to further include in the monitoring data a damage indicator. Similarly, the processor 31 further compares the wear on the carbon current collectors 5 to pre-determined wear thresholds which indicate a maximum allowable amount of wear. If the wear on the carbon current collectors 5 exceeds the pre-determined wear thresholds, the processor 31 is configured to include in the monitoring data the wear indicator.

In step S6, the processor 31 generates a message comprising the monitoring data. The message is transmitted from the pantograph monitoring device 1 to one or more client devices, for example client devices used by technicians performing maintenance on the pantograph 6. In another example, the message is saved to the data storage system along with a timestamp indicating the date and time that the images 8 of the pantograph 6 were recorded. The message is used by the technicians to determine whether the carbon current collectors 5 need to be repaired and/or replaced. In particular, the client device uses the monitoring data to display one or more images 8 of the carbon current collectors 5 with the detected features marked on the one or more images 8. Further, the absolute height profiles 56, 57, of the carbon current collectors 5 are displayed by the client device. If the monitoring data comprises the damage and/or the wear indicator, the technicians visually inspect and, if necessary, replace the carbon current collectors 5.

In an embodiment, the processor 31 is further configured to use a predictive module to determine a next monitoring date on which the pantograph 6 is to be inspected. In particular, the predictive module has as an input the monitoring data and has as an output the next monitoring date. In one example, the predictive module uses monitoring data from several different days to produce a trend-line which indicates a rate of wear. The predictive module uses the trend-line to determine on which future day the predicted wear will exceed the pre-determined wear threshold, and sets this future day as the next monitoring date.

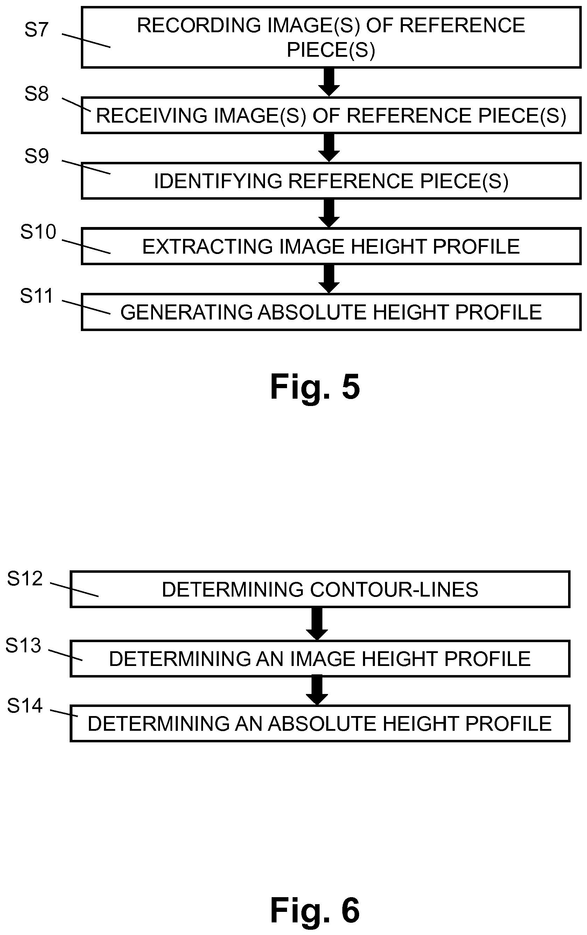

**Figure 5** illustrates an exemplary sequence of steps for carrying out the invention. In step S7, the imaging module 2 records one or more images 8 of the reference pieces 7. The images 8 of the reference pieces 7 preferably also include the pantograph 6 and the carbon current collectors 7.

In step S8, the images 8 of the reference pieces 7 are transmitted by the imaging module 2 to the analysis module 3. In particular, the images 8 of the reference pieces 7 are transmitted by the imaging module 2 and received by the processor 31 of the analysis module via the communication interface.

In step S9, the reference pieces 7 in the image are identified by the processor 31. The processor 31 uses the neural network 32 to generate reference piece masks which outline each of the reference pieces 7. The reference piece masks define the shape of the reference pieces 7 in the image 8. In an example where the reference pieces 7 are rectangles, the reference piece masks are approximately parallelograms when taking into account the relative angle and/or skew of the cameras 21 relative to the surface normals of the reference pieces 7. The processor 31 generates a scale mapping using the actual dimensions of the reference pieces 7, which are known, and the reference piece masks. The scale mapping is used to determine the absolute lengths and sizes of objects and features in the images 8 from their sizes in the images 8. The scale mapping is used in particular to determine absolute shape, size, orientation, and/or dimensions of the carbon current collectors 5.

The processor 31 also identifies in the images 8, using the neural network 32, the carbon current collectors 5 and can generate contour-lines which define the edges of the carbon current collectors 5 in the images 8. For example, contour-lines can define the bottom edges of the carbon current collectors 5, along with the front top edge and back top edge. In step S10, a height profile of the carbon current collectors 5 is extracted from the images 8 by the processor 31, e.g. by using the contour-lines. In particular, a height profile of the front edge and/or back edge of the carbon current collectors 5 is extracted from the images 8. The height profile can be extracted at a number of points along the longitudinal direction L, and the height profile can be given as the number of pixels between the bottom edges of the carbon current collectors 5 in the images 8 and the top edges of the carbon current collectors 5 in the images 8.

In step S11 the processor 31 generates absolute height profiles 56, 57 of the carbon current collectors 5. In particular, the processor 31 uses the scale mapping and the height profiles of the carbon current collectors 5 to generate absolute height profiles 56, 57.

In an embodiment, the absolute height profile of the carbon current collectors is accurate to within ±2 millimeters, preferred ±1 millimeters, more preferred ±0.5 millimeters, most preferred ±0.3 millimeters. This can be enabled by using cameras 21 with sufficiently high resolution sensors and configuring the neural network 32 such that it processes such high resolution images 8. It can further be enabled by using a flash as a lighting module 22 which creates images 8 with higher contrast and by configuring the cameras 21 to use a faster shutter speed, reducing motion blur in the event that the vehicle 60 is moving during recording of the images 8.

**Figure 6** illustrates another exemplary sequence of steps for carrying out the invention. In step S12, the processor 31 determines contour-lines of the carbon current collectors 5 in the received images 8. The contour-lines are determined by detecting edges in the images 8, in particular by detecting points in the images 8 where the contrast changes rapidly in one or more directions around the point, and joining the points to form the edges.

In step S13, an image height profile is determined by the processor 31. The image height profile is the height profile of the carbon current collectors 5 in the image 8. The image height profile can be determined by using the contour-lines to determine a face of the carbon current collector 31 which face extends horizontally in the longitudinal direction L and vertically in the height direction H (see for example Figure 3 or Figure 7 below). An image height profile is determined for each carbon current collector 5 of the pantograph 6 in the images 8. In particular, for each image 8 comprising one or more carbon current collectors 5, a set of image height profiles is determined.

In step S14, the image height profiles are used by the processor 31 to determine absolute height profiles of the carbon current collectors 5. The processor 31 uses at least one known dimension of the carbon current collector 5 to generate a scale mapping for determining the unknown dimensions. For example, the carbon current collector 5 has a known absolute width, the absolute width being the longitudinal extension of the carbon current collector in the longitudinal direction L. This known width is used by the processor 31 to generate the scale mapping between the absolute width of the carbon current collector 31 and the image width of the carbon current collector 31, the image width being the width of the carbon current collector 31 in the images 8. The scale mapping is then used by the processor 31 to determine the absolute height profiles of the one or more carbon current collectors 31 in the one or more images 8.

**Figure 7** shows an illustration of a carbon current collector 5. The carbon current collector 5 has a width w defined as the extension of the carbon current collector 5 in the longitudinal direction L. The carbon current collector 5 has a height h defined as the extension of the carbon current collector 5 in the vertical direction H. The height h of the carbon current collector 5 varies along the width *w* of the carbon current collector 5. The carbon current collector 5 has a front face *f* as well as a rear face. The front face *f* faces the front of the vehicle 60. The carbon current collector 5 further shows normal wear 51 as a result of friction with the overhead contact line. The hatched region indicates those areas worn away. The dotted line indicates the height profile of an unworn carbon current collector 5. It can be seen that the front and rear face of the carbon current collector 5, which terminate in upper edges, specifically the front and rear edges, respectively, have a different wear profile.

**Figure 8** shows an illustration of the carbon current collector 5 with the feature of abraded areas 52. The abraded areas 52 are typically found at the lateral end regions of the carbon current collector 5 and are substantially flat sections inclined at an angle to the top surface of the carbon current collector 5. The abraded areas 52 can form due to insufficiently balanced rockers on the pantograph 6. The neural network 32 can identify and characterize or quantify the abraded areas 52. If the wear in the abraded areas 52 is such that the height of the carbon current collector 5 in the abraded areas 52 has fallen below a wear threshold or abrasion threshold, the processor 31 can include in the monitoring data the wear or abrasion indicator.

**Figure 9** shows an illustration of a close-up view of the carbon current collector 5 of Figure 8 with the abraded area 52. Additionally, a dotted rectangle illustrates an example of the output of the neural network 32. The neural network 32 can identify in the image 8 the feature of the abraded area 52 and can output the image 8 marked with the dotted rectangle around the abraded area 52. Additionally, the neural network 32 can output the label assigned to the feature. Furthermore, the neural network 32 can output a feature probability. The feature probability is a measure of the certainty the neural network 32 assigns to the identified feature. A high feature probability indicates that the neural network 32 determines that it is very likely that the feature was identified correctly in the image 8, whereas a low feature probability indicates that the neural network 32 determines that it is less likely that the feature was identified correctly. If the feature probability falls below a pre-determined threshold, the neural network 32 will not mark the image 8 with the dotted rectangle and the neural network 32 will not indicate that the feature was identified.

**Figure 10** shows an illustration of a close-up view of the carbon current collector 5 when viewed front on. The front face *f* of the carbon current collector 5 is shown. The front face f has a front edge whose height h from the bottom edge varies along the longitudinal direction L. The rear face (not visible) also has a rear edge (visible). The dotted rectangle indicates an area of the rear edge with chipped areas 53 and/or irregular wear areas 53. The chipped areas 53 are areas of the carbon current collector 5 which have chipped away or broken off, and leave an uneven or jagged hole or cavity in the carbon current collector 5. The chipped areas 53 are often caused by a damaged overhead contact line. If the wear in the chipped areas 53 is such that the height h of the carbon current collector 5 in the chipped areas 53 has fallen below a wear threshold, the processor 31 includes in the monitoring data the wear indicator.

**Figure 11** shows an illustration of a carbon current collector 5 with chipped areas 53. The neural network 32 identifies the features of the chipped areas 53 and has as an output labelled areas, the areas describing the location of the features and the labels classifying and/or describing (i.e. characterizing and/or quantifying) the feature.

**Figure 12** shows an illustration of a carbon current collector 5 with a fracture 54. The fracture 54 extends from the front face *f* of the carbon current collector 5 along the top of the carbon current collector 5. The fracture 54 is a small crack, a fissure, and/or a complete break in the carbon current collector. The fracture 54 extends across the entire carbon current collector 5 (here along the travel direction F), or extends only partially through and/or into the carbon current collector 5 (e.g. along the travel direction F). The fracture 54 is caused by the carbon current collector 5 snagging or catching on a defect overhead contact line. The neural network 32 detects fractures 54 in the images 8 and includes in the monitoring data the damage indicator indicating that a fracture 54 was identified in the images 8. The technician receiving the message comprising the monitoring data in their client device is instructed to visually inspect and/or replace the carbon current collector 5.

**Figure 13** shows an illustration of a carbon current collector 5 with a fracture 54. The hatched area illustrates how the fracture 54 can extend across and through the carbon current collector 5 from the front face f to the rear face, here approximately along the travel direction F.

**Figure 14** illustrates an exemplary sequence of steps for identifying features by use of a neural network. In step S31 , the images 8 of the pantograph 6 which comprises the carbon current collectors 5 and the reference pieces 7 is input into the neural network 32. In step S32, the processor 31 uses the neural network 32 to process the images 8. The neural network 32 outputs the identified features. In particular, the neural network 32 outputs a list of features which were identified in the images 8. The features are indicated on the images 8, as illustrated by the dotted rectangle.

**Figure 15** shows an illustration of an absolute height profile as generated by the processor 31. The absolute height profile is plotted at a number of different positions, which correspond to positions along the width *w* of the carbon current collector 5. It can also be seen that the determination of the absolute height profile is precise to within the scale range of a millimeter, preferably sub-millimeter.

A front edge absolute height profile 56 and a back edge absolute height profile 57 are generated, which correspond to the height of the front edge of the carbon current collector 5 relative to the bottom edge of the carbon current collector 5 and the back edge of the carbon current collector 5 relative to the bottom edge of the carbon current collector 5. The pre-determined wear threshold 55 is also shown. If the front edge absolute height profile 56 and/or the back edge absolute height profile 57 are less than the wear threshold 55 at one or more points, or if the front edge absolute height profile 56 and/or the back edge absolute height profile 57 have fallen below the wear threshold 55 at a significant proportion of points, processor 31 is configured to include in the monitoring data a wear indicator.

It should be noted that, in the description, the sequence of the steps has been presented in a specific order, one skilled in the art will understand, however, that the order of at least some of the steps could be altered, without deviating from the scope of the invention.

### LIST OF DESIGNATIONS

- 1: Pantograph Monitoring Device
- 2: Imaging Module
- 3: Analysis Module
- 5: Carbon Current Collector
- 6: Pantograph
- 7: Reference Piece
- 8: Image
- 21: Camera
- 22: Lighting Module
- 31: Processor
- 32: Neural Network
- 51: Worn Areas
- 52: Abraded Areas
- 53: Chipped Areas
- 54: Fractures
- 55: Pre-determined Wear Threshold
- 56: Front Edge Absolute Height Profile
- 57: Back Edge Absolute Height Profile
- S1: Record Image(s) by Imaging Module
- S2: Receive Images in Processor
- S3: Identify Features Using Neural Network
- S4: Extract Shape Information
- S5: Generate Monitoring Data Comprising Damage And/Or Wear
- S6: Generate Message Comprising Monitoring Data
- S7: Recording Image(s) of Reference Piece(s)
- S8: Receiving Image(s) of Reference Piece(s)
- S9: Identifying Reference Piece(s)
- S10: Extracting Image Height Profile
- S11: Generating Absolute Height Profile
- S12: Determining Contour Lines
- S13: Determining an Image Height Profile
- S14: Determining an Absolute Height Profile
- S31: Input Image(s) Of Pantograph
- S32: Process Images Using Neural Network
- S33: Output Identified Features
- F: Travel Direction of Train
- H: Height Direction
- L: Longitudinal Direction
- *h*: height
- w: width
- *f*: front face

## Claims

1. Computer-implemented method for detecting wear and/or damage of a carbon current collector (5) of a pantograph (6) attached to a vehicle (60) with overhead contact line, in particular a train or tram, the method comprising the following steps of:
recording (S1), by an imaging module (2) having at least one camera (21), one or more images (8) of the pantograph (6);
receiving (S2), in a processor (31), from the imaging module (2), the one or more images (8);
identifying (S3), by the processor (31), features in the one or more images (8) of the carbon current collector (5) by use of a neural network (32), using only the one or more images (8) recorded by the imaging module (2) and the neural network (32);
extracting (S4), by the processor (31), shape information of the carbon current collector (5) from the one or more images (8) and extracting a height profile of the carbon current collector (5) using only the one or more images (8) recorded by the imaging module (2) and the neural network (32);
generating (S5), by the processor (31), by using the features and the shape information, monitoring data comprising information about wear and/or damage of the carbon current collector (5); and
generating (S6), by the processor (31), a message comprising the monitoring data for planning and/or performing maintenance actions for the pantograph (6).

2. The computer-implemented method according to claim 1, wherein identifying the features of the carbon current collector (5) using the neural network (32) further comprises the processor (31) training the neural network (32) to detect the features using machine learning and a training dataset comprising images of pantographs (6) labeled with the features.

3. The computer-implemented method according to one of claims 1 or 2, wherein identifying the features of the carbon current collector (5) using the neural network (32) comprises the processor (31) using a convolutional neural network, preferably comprising a U-Net and/or a ResNet.

4. The computer-implemented method according to one of claims 1 to 3, comprising the steps of:
recording (S2), in the imaging module (2), one or more images (8) comprising one or more reference pieces (7) of known dimensions and/or orientations arranged near the pantograph (6);
receiving (S8), in the processor (31), the one or more images (8) comprising the one or more reference pieces (7);
identifying (S9), by the processor (31), the one or more reference pieces (7);
extracting (S10), by the processor (31), from the shape information an image height profile of the carbon current collector (5); and
generating (S11), by the processor (31), an absolute height profile (56, 57) of the carbon current collector (5) by using the image height profile and the known dimensions and/or orientations of the one or more reference pieces (7).

5. The computer-implemented method according to one of claims 1 to 4, wherein extracting the shape information, in particular the height profile, of the carbon current collector (5) comprises the processor (31) performing the steps of:
determining (S12) at least approximate contour-lines of the carbon current collector (5) in the one or more images (8);
determining (S13), using the contour-lines, an image height profile of the carbon current collector (5) in the one or more images (8) at a first plurality of points; and
determining (S14), using the image height profile, at a second plurality of points an absolute height profile (56, 57) of the carbon current collector (5) as a function of positions along a longitudinal axis (L) of the carbon current collector (5).

6. The computer-implemented method according to one of claims 1 to 5, wherein the method comprises:
recording (S1), by the imaging module (2), using exactly one camera (21) of the imaging module (2), the one or more images (8) of the pantograph (6), in particular recording (S1) with exactly one camera (21) a time series of single-perspective images (8) each taken when the pantograph (6) is positioned at a predefined distance or within a predefined distance interval to the camera (21);
receiving (S2), in the processor (31), the one or more images (8);
identifying (S3), by the processor (31), in the one or more images (8) the features of the carbon current collector (5) using the neural network;
extracting (S4), by the processor (31), from the one or more images (8) an image height profile of the carbon current collector (5); and
determining, by the processor (31), the image height profile of the carbon current collector (5) to an absolute height scale by using one or more reference pieces (7) of known dimensions and/or orientations arranged near the pantograph (6).

7. The computer-implemented method according to one of claims 1 to 6, wherein determining wear on the carbon current collector (5) comprises the processor (31) determining the wear with an absolute height scale accuracy of ±2 millimeters, preferred ±1 millimeters, more preferred ±0.5 millimeters, most preferred ±0.3 millimeters.

8. The computer-implemented method according to one of claims 1 to 7, wherein the method comprises:
recording (S1), using at least two cameras (21) of the imaging module (2), two or more images (8) taken from a plurality of perspectives or angles of the pantograph (6), and
receiving (S2), in the processor (31), two or more images (8);
identifying (S3), by the processor (31), in the two or more images (8), the features of the carbon current collector (5) by use of the neural network (32), in particular without stereoscopic image analysis;
extracting (S4), by the processor (31), from the two or more images (8), a plurality of height profiles of the carbon current collector (5); and
generating (S5), by the processor (31), monitoring data comprising information on wear and/or damage of the carbon current collector (5) with improved accuracy, by using, from the two or more images (8), the identified features and the extracted plurality of height profiles.

9. The computer-implemented method according to one of claims 1 to 8, wherein identifying (S3), by the processor (31), in the one or more images (8) the features comprises identifying (S3) one or more of: a mask which defines boundaries, edges, contour-lines, worn areas (51), abraded areas (52), chipped areas (53), and fractures (54).

10. The computer-implemented method according to one of the claims 1 to 9, wherein the processor (31) is configured to use only the one or more images (8) recorded by the imaging module (2) and the neural network (32) to identify the features of the carbon current collector (5) and/or to extract the height profile of the carbon current collector (5); wherein no use is made of an a-priori model, such as a CAD model, of the carbon current collector (5) or of the pantograph (6).

11. The computer-implemented method according to one of claims 1 to 10, further comprising:
predicting, by the processor (31), using monitoring data and a prediction model, a next monitoring date on which the carbon current collector (5) of the pantograph (6) is to be monitored and/or replaced; and
generating, by the processor (31), a message comprising the next monitoring date.

12. Pantograph monitoring device (1), in particular for performing the computer-implemented method according to one of the preceding claims, for detecting wear and/or damage of a carbon current collector (5) of a pantograph (6) attached to a vehicle (60) with overhead contact line, in particular a train or tram, the pantograph monitoring device (1) comprising:
an imaging module (2) comprising at least one camera (21) arranged to view the pantograph (6), in particular from above, and configured to record (S1) one or more images (8) of the pantograph (6); and
an analysis module (3), connected to the imaging module (2), comprising a processor (31) configured:
to receive (S2), from the imaging module (2), the one or more images (8),
to identify (S3), in the one or more images (8), by use of a neural network (32), features of the carbon current collector (5), using only the one or more images (8) recorded by the imaging module (2) and the neural network (32),
to extract (S4) from the one or more images (8) shape information of the carbon current collector (5), and to extract a height profile of the carbon current collector (5) using only the one or more images (8) recorded by the imaging module (2) and the neural network (32),
to generate (S5), using the features and the shape information, monitoring data comprising information on wear and/or damage of the carbon current collector (5), and
to generate (S6) a message comprising the monitoring data for planning and/or performing maintenance actions for the pantograph (6), in particular for planning and/or performing maintenance and/or replacement of the carbon current collector (5).

13. The pantograph monitoring device (1) of claim 12, wherein the imaging module (2) is arranged to view (S7) one or more reference pieces (7) of known dimensions and/or orientations arranged near the pantograph (6), in particular on the pantograph (6), and
wherein the processor (31) is further configured:
to extract (S4; S12, S13) from the shape information an image height profile of the carbon current collector (5),
to identify (S8, S9) the one or more reference pieces (7), and
to generate (S9, S10) an absolute height profile (56, 57) of the carbon current collector (5) by using the image height profile and a comparison to the known dimensions and/or orientations of the one or more reference pieces (7).

14. The pantograph monitoring device (1) of claim 13, wherein the at least one camera (21) of the imaging module (2) is arranged at a position and/or perspective or angle such that it records (S7) one or more images (8) of the one or more reference pieces (7) without or with negligible or with predetermined constant skew and/or distortion.

15. The pantograph monitoring device (1) of at least one of the claims 12-14, wherein the imaging module (2) comprises a plurality of cameras (21) configured to record (S1) one or more images (8) from a plurality of perspectives or angles to improve image analysis, in particular without stereoscopic image analysis.

16. The pantograph monitoring device (1) of at least one of the claims 12-14, wherein the imaging module (2) uses a single camera (21); in particular wherein the exactly one camera (21) is configured to record (S1) a time series of single-perspective images (8) each taken when the pantograph (6) is positioned at a predefined distance or within a predefined distance interval to the camera (21).

17. The pantograph monitoring device (1) of at least one of the claims 12-16, wherein the imaging module (2) further comprises a lighting module (22) configured to illuminate the pantograph (6) when recording the one or more images (8) of the pantograph (6).

18. The pantograph monitoring device (1) of at least one of the claims 12-17, wherein the pantograph monitoring device (1) is stationary, and the imaging module (2) is further configured to record (S1) the one or more images (8) when the pantograph (6), or the train or tram to which the pantograph (6) is attached, is moving.

19. Computer program product comprising a non-transitory computer-readable storage medium having stored thereon computer program code which, when the program is executed by a processor (31) of the computer, cause the processor (31) of the computer to carry out the steps of:
recording (S1), using an imaging module (2) having at least one camera (21), one or more images (8) of the pantograph (6);
receiving (S2) from the imaging module the one or more images (8);
identifying (S3) in the one or more images (8) features of the carbon current collector (5) by use of a neural network (32) using only the one or more images (8) recorded by the imaging module (2) and the neural network (32);
extracting (S4) from the one or more images (8) shape information of the carbon current collector (5) and extracting a height profile of the carbon current collector (5) using only the one or more images (8) recorded by the imaging module (2) and the neural network (32);
generating (S5) by using the features and the shape information, monitoring data comprising information on wear and/or damage of the carbon current collector (5); and
generating (S6) a message comprising the monitoring data for planning and/or performing maintenance actions for the pantograph (6).

## Patentansprüche

1. Computergestütztes Verfahren zum Erkennen von Verschleiss und/oder Beschädigung an einem Kohlenstoff-Stromabnehmer (5) eines Pantographen (6), der an einem Fahrzeug (60) mit Oberleitung angebracht ist, insbesondere an einem Zug oder einer Strassenbahn, wobei das Verfahren die folgenden Schritte umfasst:
aufzeichnen (S1) eines oder mehrerer Bilder (8) des Pantographen (6) durch ein Bildgebungsmodul (2) , das mindestens eine Kamera (21) aufweist;
empfangen (S2) eines oder mehrerer Bilder (8) vom Bildgebungsmodul (2) in einem Prozessor (31);
identifizieren (S3) von Merkmalen in einem oder mehreren Bildern (8) des Kohlenstoff-Stromabnehmers (5) durch den Prozessor (31) unter Verwendung eines neuronalen Netzwerks (32), unter ausschliesslicher Verwendung des einen oder der mehreren vom Bildgebungsmodul (2) aufgezeichneten Bilder (8) und des neuronalen Netzwerks (32);
extrahieren (S4) durch den Prozessor (31) von Forminformationen des Kohlenstoff-Stromabnehmers (5) aus dem einen oder den mehreren Bildern (8) und extrahieren eines Höhenprofils des Kohlenstoff-Stromabnehmers (5) unter ausschliesslicher Verwendung des einen oder der mehreren vom Bildgebungsmodul (2) aufgezeichneten Bilder (8) und des neuronalen Netzwerks (32);
erzeugen (S5) von Überwachungsdaten durch den Prozessor (31) unter Verwendung der Merkmale und der Forminformationen, wobei die Überwachungsdaten Informationen über Verschleiss und/oder Beschädigung des Kohlenstoff-Stromabnehmers (5) umfassen; und
erzeugen (S6) einer Meldung durch den Prozessor (31), die die Überwachungsdaten zur Planung und/oder Durchführung von Wartungsmassnahmen für den Pantographen (6) enthält.

2. Das computergestützte Verfahren nach Anspruch 1, wobei das Erkennen der Merkmale des Kohlenstoff-Stromabnehmers (5) mithilfe des neuronalen Netzwerks (32) ferner umfasst, dass der Prozessor (31) das neuronale Netzwerk (32) trainiert, um die Merkmale mittels maschinellen Lernens zu erkennen, und zwar anhand eines Trainingsdatensatzes, der Bilder von Pantographen (6) enthält, die mit den Merkmalen bezeichnet sind.

3. Das computergestützte Verfahren nach einem der Ansprüche 1 oder 2, wobei das Erkennen der Merkmale des Kohlenstoff-Stromabnehmers (5) unter Verwendung des neuronalen Netzwerks (32) umfasst, dass der Prozessor (31) ein konvolutionelles neuronales Netzwerk verwendet, das vorzugsweise ein U-Net und/oder ein ResNet umfasst.

4. Das computergestützte Verfahren nach einem der Ansprüche 1 - 3, umfassend die folgenden Schritte:
aufzeichnen (S2) im Bildgebungsmodul (2) von einem oder mehreren Bildern (8), die ein oder mehrere Referenzstücke (7) mit bekannten Abmessungen und/oder Ausrichtungen zeigen, die in der Nähe des Pantographen (6) angeordnet sind;
empfangen (S8) der einen oder mehreren Bilder (8), die das eine oder die mehreren Referenzstücke (7) enthalten, im Prozessor (31);
identifizieren (S9) des einen oder der mehreren Referenzstücke (7) durch den Prozessor (31);
extrahieren (S10) eines Höhenprofilbilds des Kohlenstoff-Stromabnehmers (5) aus den Forminformationen durch den Prozessor (31); und
erzeugen (S11) eines absoluten Höhenprofils (56, 57) des Kohlenstoff-Stromabnehmers (5) durch den Prozessor (31) unter Verwendung des Höhenprofilbilds und der bekannten Abmessungen und/oder Ausrichtungen des einen oder der mehreren Referenzstücke (7).

5. Das computergestützte Verfahren nach einem der Ansprüche 1 - 4, wobei das Extrahieren der Forminformationen, insbesondere des Höhenprofils, des Kohlenstoff-Stromabnehmers (5) umfasst, dass der Prozessor (31) die folgenden Schritte ausführt:
ermitteln (S12) zumindest ungefährer Konturlinien des Kohlenstoff-Stromabnehmers (5) in dem einen oder den mehreren Bildern (8);
ermitteln (S13) eines Höhenprofils des Kohlenstoff-Stromabnehmers (5) in dem einen oder den mehreren Bildern (8) an einer ersten Vielzahl von Punkten unter Verwendung der Konturlinien; und
ermitteln (S14) unter Verwendung des Höhenprofilbilds an einer zweiten Vielzahl von Punkten ein absolutes Höhenprofil (56, 57) des Kohlenstoff-Stromabnehmers (5) als Funktion von Positionen entlang einer Längsachse (L) des Kohlenstoff-Stromabnehmers (5).

6. Das computergestützte Verfahren nach einem der Ansprüche 1 - 5, wobei das Verfahren umfasst:
aufzeichnen (S1) durch das Bildgebungsmodul (2), unter Verwendung genau einer Kamera (21) des Bildgebungsmoduls (2), des einen oder der mehreren Bilder (8) des Pantographen (6), insbesondere aufzeichnen (S1) mit jeweils genau einer Kamera (21) eine Zeitreihe von Ein-Perspektiven-Bildern (8), die je aufgezeichnet werden, wenn sich der Pantograph (6) in einem vordefinierten Abstand oder innerhalb eines vordefinierten Abstandsintervalls zur Kamera (21) befindet;
empfangen (S2) des einen oder der mehreren Bilder (8) im Prozessor (31);
identifizieren (S3) der Merkmale des Kohlenstoff-Stromabnehmers (5) in einem oder mehreren Bildern (8) durch den Prozessor (31) unter Verwendung des neuronalen Netzwerks;
extrahieren (S4) eines Höhenprofils des Kohlenstoff-Stromabnehmers (5) aus dem einen oder den mehreren Bildern (8) durch den Prozessor (31); und
ermitteln des Höhenprofils des Kohlenstoff-Stromabnehmers (5) durch den Prozessor (31) auf einer absoluten Höhenskala unter Verwendung eines oder mehrerer Referenzstücke (7) mit bekannten Abmessungen und/oder Ausrichtungen, die in der Nähe des Pantographen (6) angeordnet sind.

7. Das computergestützte Verfahren nach einem der Ansprüche 1 - 6, wobei das Ermitteln des Verschleisses am Kohlenstoff-Stromabnehmer (5) umfasst, dass der Prozessor (31) den Verschleiss mit einer Genauigkeit der absoluten Höhenskala von ±2 Millimetern, vorzugsweise ±1 Millimeter, noch bevorzugter ±0,5 Millimeter und am meisten bevorzugt ±0,3 Millimeter ermittelt.

8. Das computergestützte Verfahren nach einem der Ansprüche 1 - 7, wobei das Verfahren umfasst:
aufzeichnen (S1), unter Verwendung von mindestens zwei Kameras (21) des Bildgebungsmoduls (2), zwei oder mehr Bilder (8), die aus einer Vielzahl von Perspektiven oder Blickwinkeln des Pantographen (6) aufgenommen wurden, und
empfangen (S2) von zwei oder mehr Bildern (8) im Prozessor (31);
identifizieren (S3) der Merkmale des Kohlenstoff-Stromabnehmers (5) durch den Prozessor (31) in den zwei oder mehr Bildern (8) unter Verwendung des neuronalen Netzwerks (32), insbesondere ohne stereoskopische Bildanalyse;
extrahieren (S4) einer Vielzahl von Höhenprofilen des Kohlenstoff-Stromabnehmers (5) aus den zwei oder mehr Bildern (8) durch den Prozessor (31); und
erzeugen (S5) von Überwachungsdaten durch den Prozessor (31), die Informationen über Verschleiss und/oder Beschädigung des Kohlenstoff-Stromabnehmers (5) mit verbesserter Genauigkeit enthalten, indem aus den zwei oder mehr Bildern (8) die erkannten Merkmale und die extrahierte Vielzahl von Höhenprofilen verwendet werden.

9. Das computergestützte Verfahren nach einem der Ansprüche 1 - 8, wobei das Erkennen (S3) der Merkmale durch den Prozessor (31) in dem einen oder den mehreren Bildern (8) das Erkennen (S3) eines oder mehrerer der folgenden Elemente umfasst: eine Maske, die Grenzen, Kanten, Konturlinien, abgenutzte Bereiche (51), abgeschliffene Bereiche (52), abgesplitterte Bereiche (53) und Brüche (54).

10. Das computergestützte Verfahren nach einem der Ansprüche 1 - 9, wobei der Prozessor (31) konfiguriert ist, ausschliesslich das eine oder die mehreren vom Bildgebungsmodul (2) aufgezeichneten Bilder (8) und das neuronale Netzwerk (32) zu verwenden, um die Merkmale des Kohlenstoff-Stromabnehmers (5) zu identifizieren und/oder das Höhenprofil des Kohlenstoff-Stromabnehmers (5) zu extrahieren; wobei kein A-priori-Modell, wie ein CAD-Modell, des Kohlenstoff-Stromabnehmers (5) oder des Pantographen (6) verwendet wird.

11. Das computergestützte Verfahren nach einem der Ansprüche 1 - 10, ferner umfassend:
vorhersagen, durch den Prozessor (31) unter Verwendung von Überwachungsdaten und eines Vorhersagemodells, eines nächsten Inspektionstermins, an dem der Kohlenstoff-Stromabnehmer (5) des Pantographen (6) inspiziert und/oder ausgetauscht werden soll; und
erzeugen einer Meldung durch den Prozessor (31), die den nächsten Inspektionstermin enthält.

12. Pantograph-Überwachungsvorrichtung (1), insbesondere zur Durchführung des computerimplementierten Verfahrens gemäss einem der vorstehenden Ansprüche, zur Erkennung von Verschleiss und/oder Beschädigung eines Kohlenstoff-Stromabnehmers (5) eines an einem Fahrzeug (60) mit Oberleitung, insbesondere einem Zug oder einer Strassenbahn, angebrachten Pantographen (6), wobei die Pantograph-Überwachungsvorrichtung (1) umfasst:
ein Bildgebungsmodul (2), das mindestens eine Kamera (21) umfasst, die so angeordnet ist, dass sie den Pantographen (6) insbesondere von oben betrachtet, und das dazu konfiguriert ist, eines oder mehrere Bilder (8) des Pantographen (6) aufzuzeichnen (S1); und
ein mit dem Bildgebungsmodul (2) verbundenes Analysemodul (3), das einen Prozessor (31) umfasst, der konfiguriert ist:
um vom Bildgebungsmodul (2) das eine oder die mehreren Bilder (8) zu empfangen (S2),
um in einem oder mehreren Bildern (8) mithilfe eines neuronalen Netzwerks (32) Merkmale des Kohlenstoff-Stromabnehmers (5) zu identifizieren (S3), wobei ausschliesslich das eine oder die mehreren vom Bildgebungsmodul (2) aufgezeichneten Bilder (8) und das neuronale Netzwerk (32) verwendet werden,
um aus dem einen oder den mehreren Bildern (8) Forminformationen des Kohlenstoff-Stromabnehmers (5) zu extrahieren (S4), wobei ausschliesslich das eine oder die mehreren vom Bildgebungsmodul (2) aufgezeichneten Bilder (8) und das neuronale Netzwerk (32) verwendet werden,
um, unter Verwendung der Merkmale und der Forminformationen, Überwachungsdaten zu erzeugen (S5), die Informationen über Verschleiss und/oder Beschädigung des Kohlenstoff-Stromabnehmers (5) umfassen, und
um eine Meldung zu erzeugen (S6), die die Überwachungsdaten zur Planung und/oder Durchführung von Wartungsmassnahmen am Pantographen (6) enthält, insbesondere zur Planung und/oder Durchführung von Wartung und/oder Austausch des Kohlenstoff-Stromabnehmers (5).

13. Die Pantograph-Überwachungsvorrichtung (1) nach Anspruch 12, wobei das Bildgebungsmodul (2) so ausgelegt ist, dass es ein oder mehrere Referenzstücke (7) mit bekannten Abmessungen und/oder Ausrichtungen, die in der Nähe des Pantographen (6), insbesondere auf dem Pantographen (6), angeordnet sind, erfasst (S7), und
wobei der Prozessor (31) ferner konfiguriert ist:
um aus den Formdaten ein Höhenprofilbild des Kohlenstoff-Stromabnehmers (5) zu extrahieren (S4; S12, S13),
um das eine oder die mehreren Referenzstücke (7) zu identifizieren (S8, S9), und
um ein absolutes Höhenprofil (56, 57) des Kohlenstoff-Stromabnehmers (5) durch Verwendung des Höhenprofilbilds und eines Vergleichs mit den bekannten Abmessungen und/oder Ausrichtungen des einen oder der mehreren Referenzstücke (7) zu erzeugen (S9, S10).

14. Die Pantograph-Überwachungsvorrichtung (1) nach Anspruch 13, wobei die wenigstens eine Kamera (21) des Bildgebungsmoduls (2) an einer Position und/oder mit einer Perspektive oder einem Winkel angeordnet ist, dass sie eines oder mehrere Bilder (8) des einen oder der mehreren Referenzstücke (7) ohne Schräglage und/oder Verzerrung oder mit vernachlässigbarer oder mit vorbestimmter konstanter Schräglage und/oder Verzerrung aufzeichnet (S7).

15. Die Pantograph-Überwachungsvorrichtung (1) gemäss einem der Ansprüche 12-14, wobei das Bildgebungsmodul (2) eine Vielzahl von Kameras (21) umfasst, die so ausgelegt sind, dass sie eines oder mehrere Bilder (8) aus mehreren Perspektiven oder Winkeln aufzeichnen (S1), um die Bildanalyse zu verbessern, insbesondere ohne stereoskopische Bildanalyse.

16. Die Pantograph-Überwachungsvorrichtung (1) nach mindestens einem der Ansprüche 12-14, wobei das Bildgebungsmodul (2) eine einzige Kamera (21) verwendet; insbesondere wobei die genau eine Kamera (21) konfiguriert ist, um eine Zeitreihe von Ein-Perspektiven-Bildern (8) aufzuzeichnen (S1), die je aufgenommen werden, wenn sich der Pantograph (6) in einem vordefinierten Abstand oder innerhalb eines vordefinierten Abstandsintervalls zur Kamera (21) befindet.

17. Die Pantograph-Überwachungsvorrichtung (1) nach mindestens einem der Ansprüche 12-16, wobei das Bildgebungsmodul (2) ferner ein Beleuchtungsmodul (22) umfasst, das konfiguriert ist, um den Pantographen (6) zu beleuchten, wenn das eine oder die mehreren Bilder (8) des Pantographen (6) aufgezeichnet werden.

18. Die Pantograph-Überwachungsvorrichtung (1) nach mindestens einem der Ansprüche 12-17, wobei die Pantograph-Überwachungsvorrichtung (1) ortsfest ist und das Bildgebungsmodul (2) ferner dazu ausgelegt ist, das eine oder die mehreren Bilder (8) aufzuzeichnen (S1), wenn sich der Pantograph (6) oder der Zug bzw. die Strassenbahn, an dem bzw. der der Pantograph (6) angebracht ist, bewegt.

19. Computerprogrammprodukt, das ein nichtflüchtiges, computerlesbares Speichermedium umfasst, auf dem Computerprogrammcode gespeichert ist, der, wenn das Programm von einem Prozessor (31) des Computers ausgeführt wird, den Prozessor (31) des Computers veranlasst, die folgenden Schritte auszuführen:
aufzeichnen (S1) von einem oder mehreren Bildern (8) des Pantographen (6) unter Verwendung eines Bildgebungsmoduls (2) mit mindestens einer Kamera (21);
empfangen (S2) des einen oder der mehreren Bilder (8) vom Bildgebungsmodul;
identifizieren (S3) von Merkmalen des Kohlenstoff-Stromabnehmers (5) in dem einen oder den mehreren Bildern (8) unter Verwendung eines neuronalen Netzwerks (32), wobei ausschliesslich das eine oder die mehreren vom Bildgebungsmodul (2) aufgezeichneten Bilder (8) und das neuronale Netz (32) verwendet werden;
extrahieren (S4) von Forminformationen des Kohlenstoff-Stromabnehmers (5) aus dem einen oder den mehreren Bildern (8) sowie extrahieren eines Höhenprofils des Kohlenstoff-Stromabnehmers (5) unter ausschliesslicher Verwendung des einen oder der mehreren vom Bildgebungsmodul (2) aufgenommenen Bilder (8) und des neuronalen Netzes (32);
erzeugen (S5) unter Verwendung der Merkmale und der Forminformationen von Überwachungsdaten, die Informationen über Verschleiss und/oder Beschädigung des Kohlenstoff-Stromabnehmers (5) enthalten; und
erzeugen (S6) einer Meldung, die die Überwachungsdaten zur Planung und/oder Durchführung von Wartungsmassnahmen für den Pantographen (6) enthält.

## Revendications

1. Procédé mis en œuvre par ordinateur permettant de détecter l'usure et/ou l'endommagement d'un collecteur de courant en carbone (5) d'un pantographe (6) monté sur un véhicule (60) parcourant une ligne aérienne de contact, en particulier un train ou un tramway, le procédé comprenant les étapes suivantes:
enregistrer (S1), par un module d'imagerie (2) comportant au moins une caméra (21), une ou plusieurs images (8) du pantographe (6) ;
recevoir (S2), dans un processeur (31), du module d'imagerie (2), une ou plusieurs images (8) ;
identifier (S3), par le processeur (31), les caractéristiques présentes dans une ou plusieurs images (8) du collecteur de courant en carbone (5) à l'aide d'un réseau neuronal (32), en utilisant uniquement la ou les images (8) enregistrées par le module d'imagerie (2) et le réseau neuronal (32);
extraire (S4), par le processeur (31), des informations de forme du collecteur de courant en carbone (5) à partir d'une ou plusieurs images (8) et extraire un profil de hauteur du collecteur de courant en carbone (5) en utilisant uniquement la ou les images (8) enregistrées par le module d'imagerie (2) et le réseau neuronal (32);
générer (S5), par le processeur (31), à partir des caractéristiques et des informations de forme, des données de surveillance comprenant des informations sur l'usure et/ou l'endommagement du collecteur de courant en carbone (5) ; et générer (S6), par le processeur (31), un message comprenant les données de surveillance pour planifier et/ou effectuer des opérations de maintenance sur le pantographe (6).

2. Procédé mis en œuvre par ordinateur selon la revendication 1, dans lequel l'identification des caractéristiques du collecteur de courant en carbone (5) à l'aide du réseau neuronal (32) comprend en outre l'entraînement par le processeur (31) du réseau neuronal (32) afin de détecter les caractéristiques à l'aide de l'apprentissage automatique et d'un ensemble de données d'entraînement comprenant des images du pantographe (6) étiquetées avec les caractéristiques.

3. Procédé mis en œuvre par ordinateur selon une des revendications 1 ou 2, dans lequel l'identification des caractéristiques du collecteur de courant en carbone (5) à l'aide du réseau neuronal (32) comprend l'utilisation, par le processeur (31), d'un réseau neuronal convolutif, comprenant de préférence un U-Net et/ou un ResNet.

4. Procédé mis en œuvre par ordinateur selon l'une des revendications 1 à 3, comprenant les étapes suivantes:
enregistrer (S2), dans le module d'imagerie (2), une ou plusieurs images (8) comprenant une ou plusieurs pièces de référence (7) de dimensions et/ou d'orientations connues, disposées à proximité du pantographe (6);
recevoir (S8), dans le processeur (31), la ou les images (8) comprenant la ou les pièces de référence (7);
identifier (S9), par le processeur (31), la ou les pièces de référence (7) ;
extraire (S10), par le processeur (31), à partir des informations de forme, une image du profil de hauteur du collecteur de courant en carbone (5) ; et
générer (S11), par le processeur (31), un profil de hauteur absolu (56, 57) du collecteur de courant en carbone (5) à partir de l'image du profil de hauteur et des dimensions et/ou orientations connues de la ou des pièces de référence (7).

5. Procédé mis en œuvre par ordinateur selon une des revendications 1 à 4, dans lequel l'extraction des informations de forme, en particulier du profil de hauteur, du collecteur de courant en carbone (5) comprend l'exécution par le processeur (31) des étapes suivantes:
déterminer (S12) au moins les courbes de niveau approximatives du collecteur de courant en carbone (5) dans l'une ou plusieurs des images (8);
déterminer (S13), à l'aide des courbes de niveau, une image du profil de hauteur du collecteur de courant en carbone (5) dans une ou plusieurs images (8) en une première pluralité de points; et
déterminer (S14), à partir de l'image du profil de hauteur, en une deuxième pluralité de points, un profil de hauteur absolue (56, 57) du collecteur de courant en carbone (5) en fonction des positions le long d'un axe longitudinal (L) du collecteur de courant en carbone (5).

6. Procédé mis en œuvre par ordinateur selon une des revendications 1 à 5, **caractérisé en ce que** le procédé comprend:
enregistrer (S1), par le module d'imagerie (2), à l'aide d'une seule caméra (21) du module d'imagerie (2), une ou plusieurs images (8) du pantographe (6), en particulier enregistrer (S1) avec exactement une caméra (21) une série temporelle d'images (8) à perspective unique, chacune prise lorsque le pantographe (6) est positionné à une distance prédéfinie ou dans un intervalle de distance prédéfini par rapport à la caméra (21);
recevoir (S2), dans le processeur (31), la ou les images (8);
identifier (S3), par le processeur (31), dans une ou plusieurs images (8), les caractéristiques du collecteur de courant en carbone (5) à l'aide du réseau neuronal;
extraire (S4), par le processeur (31), à partir de la ou des images (8), une image du profil en hauteur du collecteur de courant en carbone (5) ; et
déterminer, par le processeur (31), l'image du profil en hauteur du collecteur de courant en carbone (5) par rapport à une échelle de hauteur absolue, à l'aide d'une ou plusieurs pièces de référence (7) de dimensions et/ou d'orientations connues, disposées à proximité du pantographe (6).

7. Procédé mis en œuvre par ordinateur selon une des revendications 1 à 6, dans lequel la détermination de l'usure du collecteur de courant en carbone (5) comprend la détermination, par le processeur (31), de l'usure avec une précision de l'échelle de hauteur absolue de ± 2 millimètres, de préférence ± 1 millimètre, plus préférablement ± 0,5 millimètre, et de manière encore plus préférable ± 0,3 millimètre.

8. Procédé mis en œuvre par ordinateur selon une des revendications 1 à 7, dans lequel le procédé comprend:
enregistrer (S1), à l'aide d'au moins deux caméras (21) du module d'imagerie (2), deux images (8) ou plus prises sous plusieurs perspectives ou angles du pantographe (6), et
recevoir (S2), dans le processeur (31), deux images (8) ou plus;
identifier (S3), par le processeur (31), dans les deux images ou plus (8), les caractéristiques du collecteur de courant en carbone (5) à l'aide du réseau neuronal (32), notamment sans analyse d'images stéréoscopiques;
extraire (S4), à l'aide du processeur (31), à partir des deux images ou plus (8), une pluralité de profils de hauteur du collecteur de courant en carbone (5) ; et
générer (S5), par le processeur (31), des données de surveillance comprenant des informations sur l'usure et/ou l'endommagement du collecteur de courant en carbone (5) avec une précision améliorée, en utilisant, à partir des deux images ou plus (8), les caractéristiques identifiées et la pluralité de profils de hauteur extraits.

9. Procédé mis en œuvre par ordinateur selon une des revendications 1 à 8, dans lequel identifier (S3), par le processeur (31), dans la ou les images (8), les caractéristiques comprennent identifier (S3) un ou plusieurs des éléments suivants: un masque définissant des limites, des bords, des lignes de contour, des zones usées (51), des zones abrasées (52), des zones ébréchées (53) et des fractures (54).

10. Procédé mis en œuvre par ordinateur selon une des revendications 1 à 9, dans lequel le processeur (31) est configuré pour utiliser uniquement la ou les images (8) enregistrées par le module d'imagerie (2) et le réseau neuronal (32) afin d'identifier les caractéristiques du collecteur de courant en carbone (5) et/ou d'extraire le profil en hauteur du collecteur de courant en carbone (5) ; dans lequel il n'est pas fait usage d'un modèle a priori, tel qu'un modèle CAO, du collecteur de courant en carbone (5) ou du pantographe (6).

11. Procédé mis en œuvre par ordinateur selon une des revendications 1 à 10, comprenant en outre :
prédire, par le processeur (31), à l'aide de données de surveillance et d'un modèle de prédiction, une prochaine date d'inspection à laquelle le collecteur de courant en carbone (5) du pantographe (6) devra faire l'objet d'une inspection et/ou d'un remplacement ; et
générer, par le processeur (31), un message contenant la prochaine date d'inspection.

12. Dispositif de surveillance de pantographe (1), destiné en particulier à réaliser le procédé mis en œuvre par ordinateur selon une des revendications précédentes, pour détecter l'usure et/ou l'endommagement d'un collecteur de courant en carbone (5) d'un pantographe (6) monté sur un véhicule (60) parcourant une ligne aérienne de contact, en particulier un train ou un tramway, le dispositif de surveillance de pantographe (1) comprenant:
un module d'imagerie (2) comprenant au moins une caméra (21) disposée de manière à observer le pantographe (6), en particulier depuis le haut, et configurée pour enregistrer (S1) une ou plusieurs images (8) du pantographe (6) ; et
un module d'analyse (3), relié au module d'imagerie (2), comprenant un processeur (31) configuré pour :
recevoir (S2), du module d'imagerie (2), une ou plusieurs images (8),
identifier (S3), dans une ou plusieurs images (8), à l'aide d'un réseau neuronal (32), les caractéristiques du collecteur de courant en carbone (5), en utilisant uniquement la ou les images (8) enregistrées par le module d'imagerie (2) et le réseau neuronal (32),
extraire (S4) des informations de forme du collecteur de courant en carbone (5) à partir d'une ou plusieurs images (8), et extraire un profil de hauteur du collecteur de courant en carbone (5) en utilisant uniquement la ou les images (8) enregistrées par le module d'imagerie (2) et le réseau neuronal (32),
générer (S5), à partir des caractéristiques et des informations de forme, des données de surveillance comprenant des informations sur l'usure et/ou l'endommagement du collecteur de courant en carbone (5), et
générer (S6) un message comprenant les données de surveillance pour planifier et/ou effectuer des interventions de maintenance sur le pantographe (6), en particulier pour planifier et/ou effectuer la maintenance et/ou le remplacement du collecteur de courant en carbone (5).

13. Dispositif de surveillance de pantographe (1) selon la revendication 12, dans lequel le module d'imagerie (2) est disposé pour visualiser (S7) une ou plusieurs pièces de référence (7) de dimensions et/ou d'orientations connues, disposés à proximité du pantographe (6), en particulier sur le pantographe (6), et
dans lequel le processeur (31) est en outre configuré pour :
extraire (S4 ; S12, S13) à partir des informations de forme une image du profil de hauteur du collecteur de courant en carbone (5),
identifier (S8, S9) la ou les pièces de référence (7), et
générer (S9, S10) un profil de hauteur absolue (56, 57) du collecteur de courant en carbone (5) à partir de l'image du profil de hauteur et d'une comparaison avec les dimensions et/ou orientations connues de la ou des pièces de référence (7).

14. Dispositif de surveillance de pantographe (1) selon la revendication 13, dans lequel la au moins une caméra (21) du module d'imagerie (2) est disposée à une position et/ou une perspective ou un angle tels qu'elle enregistre (S7) une ou plusieurs images (8) de la ou des pièces de référence (7) sans inclinaison et/ou distorsion, avec inclinaison et/ou distorsion négligeable ou avec inclinaison et/ou distorsion constantes prédéterminées.

15. Dispositif de surveillance de pantographe (1) selon au moins une des revendications 12 à 14, dans lequel le module d'imagerie (2) comprend une pluralité de caméras (21) configurées pour enregistrer (S1) une ou plusieurs images (8) sous une pluralité de perspectives ou d'angles afin d'améliorer l'analyse d'images, en particulier sans analyse d'images stéréoscopiques.

16. Dispositif de surveillance de pantographe (1) selon au moins une des revendications 12 à 14, dans lequel le module d'imagerie (2) utilise une seule caméra (21) ; en particulier dans lequel cette caméra unique (21) est configurée pour enregistrer (S1) une série temporelle d'images à perspective unique (8) prises chacune lorsque le pantographe (6) est positionné à une distance prédéfinie ou dans un intervalle de distance prédéfini par rapport à la caméra (21).

17. Dispositif de surveillance de pantographe (1) selon au moins une des revendications 12 à 16, dans lequel le module d'imagerie (2) comprend en outre un module d'éclairage (22) configuré pour éclairer le pantographe (6) pendant l'enregistrement d'une ou plusieurs images (8) du pantographe (6).

18. Dispositif de surveillance de pantographe (1) selon au moins une des revendications 12 à 17, dans lequel le dispositif de surveillance de pantographe (1) est fixe, et le module d'imagerie (2) est en outre configuré pour enregistrer (S1) la ou les images (8) lorsque le pantographe (6), ou le train ou le tramway auquel le pantographe (6) est fixé, est en mouvement.

19. Produit logiciel comprenant un moyen de stockage non-transitoire lisible par ordinateur sur lequel est enregistré un code de programme informatique qui, lorsque le programme est exécuté par un processeur (31) de l'ordinateur, amène le processeur (31) de l'ordinateur à effectuer les étapes suivantes:
enregistrer (S1), à l'aide d'un module d'imagerie (2) comportant au moins une caméra (21), une ou plusieurs images (8) du pantographe (6);
recevoir (S2) du module d'imagerie une ou plusieurs images (8);
identifier (S3) dans une ou plusieurs images (8) les caractéristiques du collecteur de courant en carbone (5) à l'aide d'un réseau neuronal (32) en utilisant uniquement la ou les images (8) enregistrées par le module d'imagerie (2) et le réseau neuronal (32);
extraire (S4), à partir d'une ou plusieurs images (8), des informations de forme du collecteur de courant en carbone (5) et extraire un profil de hauteur du collecteur de courant en carbone (5) en utilisant uniquement la ou les images (8) enregistrées par le module d'imagerie (2) et le réseau neuronal (32);
générer (S5), à partir des caractéristiques et des informations de forme, des données de surveillance comprenant des informations sur l'usure et/ou l'endommagement du collecteur de courant en carbone (5) ; et
générer (S6) un message contenant les données de surveillance nécessaires à la planification et/ou à la réalisation d'interventions de maintenance sur le pantographe (6).
